# EUROPEAN PATENT SPECIFICATION

(11) **EP 3 127 070 B1**
(45) Date of publication and mention of the grant of the patent: **27.11.2019**
(21) Application number: 15714475.9
(22) Date of filing: 01.04.2015
(51) Int. Cl.: G06Q 30/02, H04N 21/2668, H04N 21/414

(54) **DIGITAL SIGNAGE SYSTEM**
DIGITALES BESCHILDERUNGSSYSTEM
SYSTÈME DE SIGNALISATION NUMÉRIQUE

(30) Priority: 03.04.2014 US 201414244628
(43) Date of publication of application: 08.02.2017
(73) Proprietor: Piksel, Inc., New York, NY 10011 (US)
(72) Inventor: BRUNEAUX, Sylvère, Atlanta, GA 30339 (US); OUANOUNOU, David, Atlanta, GA 30339 (US); PARAGOT, Damien, 92600 Asnieres sur Seine (FR); PORTU, Mark, Atlanta, GA 30339 (US)
(74) Representative: Williams, David John
(86) International application number: PCT/EP2015/057190
(87) International publication number: WO 2015/150461

(56) References cited:
- EP-A1- 2 704 085
- WO-A1-2012/001704
- US-A1- 2006 129 933
- US-A1- 2007 074 268
- US-A1- 2012 179 968
- US-A1- 2012 324 511
- US-B1- 8 291 041
- ADTRACTION: "Adtraction Digital Signage Solutions", INTERNET CITATION, September 2007 (2007-09), pages 1-12, XP002500936, Retrieved from the Internet: URL:http://www.adtraxion.com/en/doc/Adtrax ion_brochure_EN.pdf [retrieved on 2008-10-23]

## Description

### Technical Field

The present invention relates to a digital signage system.

### Background

Media content can be viewed at display devices in accordance with different content delivery systems.

One example of a content delivery system is a cloud based online video platform (OVP). A customer can upload content to the online video platform via a user interface which enables the content to be delivered to end users across multiple devices. Content can be managed in a media library, and customers can set rules as to where and when their videos can be viewed. Online video platform's also typically support distribution of live video broadcasts. In response to detecting selection by a viewer at a viewing device (e.g. computer, tablet, mobile phone etc.) of a media asset hosted by the online video platform, the online video platform handles the delivery of the media asset to the viewing device.

Another example of a content delivery system is a digital signage system. Digital signage is a form of electronic display that shows information, advertising and other messages on digital "signs" for example on LCD (Liquid Crystal Display), PDP (Plasma Display Panel), OLED (Organic Light Emitting Diode) displays. Digital signage has significant advantages over traditional static signs in that displayed content can be changed readily and is delivered using different mediums, including video, still images, audio and text. Digital signage can be provided according to a software-as-a-service (SaaS) model where content is uploaded to a cloud based digital signage system and delivered in the form of a custom channel to display devices in accordance with display parameters configured by a custom channel producer.

### Summary

The inventors have recognised that it is desirable for a custom channel producer of a digital signage platform to have the ability to search media content from other sources of media content other than that uploaded to storage of the digital signage system (for example the customer may have content stored on an online video platform) and use this media content from other sources in producing a custom channel for delivery to display devices.

Moving content stored on an online video platform to a digital signage platform is particularly restrictive due to the typically large size of media assets and the large number of these media assets typically stored on an online video platforms.

US 2012/0324511 discloses a technique for scheduling and broadcasting media, and an automatic channel scheduling technique. US 2007/0074268 discloses a technique in which password protection is used for authentication protocols. US 2012/179968 discloses a digital signage system in which signage is provided by a server.

According to one aspect of the present disclosure there is provided a digital signage system according to claim 1.

The authentication module may store account information of registered custom channel producers, wherein the user interface module is configured to control the display of the terminal associated with the custom channel producer to display said media asset options, in response to verifying the custom channel producer as having an account associated with the digital signage system by querying the authentication module with access credentials received from the terminal associated with the custom channel producer.

The user interface module is further configured to determine further access credentials associated with said account in response to querying the authentication module with the access credentials received from the terminal associated with the custom channel producer, and the communications interface is configured to connect to the at least one media store external to said digital signage system using said further access credentials.

The access credentials received from the terminal associated with the custom channel producer and the further access credentials may comprise at least one of a username, password and email address.

The digital signage system may further comprise at least one media store storing further media assets, wherein the displayed media asset options comprise media asset options corresponding to further media assets stored in said at least one media store of the digital signage system.

The selected media assets may comprise at least one further media asset stored in the at least one media store of the digital signage system, the custom channel controller may be configured to produce a custom channel comprising the selected media assets by retrieving the at least one media asset from the at least one media store external to said digital signage system and retrieving the at least one further media asset from the at least one media store of the digital signage system, in dependence on said display parameters.

All of the selected media assets are stored in the at least one media store external to said digital signage system, the custom channel controller may be configured to produce a custom channel by retrieving the selected media assets from the at least one media store external to said digital signage system in dependence on said display parameters.

The custom channel controller may be configured to deliver said custom channel to the one or more display device, without storing the retrieved media assets in the at least one media store of the digital signage system.

The custom channel controller may be configured to store media assets retrieved from the at least one media store external to said digital signage system in the at least one media store of the digital signage system.

The display parameters may comprise an order of the selected plurality of media assets.

The communications interface may comprise at least one application programming interface.

According to a further aspect of the present disclosure there is provided a method of delivering media content from a digital signage system to one or more display device according to claim 12.

According to another aspect of the present disclosure there is provided a computer program product for delivering media content to one or more display device according to claim 14.

### Brief Description of the Drawings

For a better understanding of the present disclosure and to show how the same may be put into effect, reference will now be made, by way of example, to the following drawings in which:
Figure 1 illustrates a schematic view of a digital signage system;
Figure 2 illustrates a schematic view of elements of the digital signage system;
Figure 3 illustrates an online video platform;
Figure 4 is a flow chart for a method to enable a custom channel producer to create a custom channel; and
Figure 5 is a flow chart for a method of delivering a custom channel to display devices.

### Detailed Description

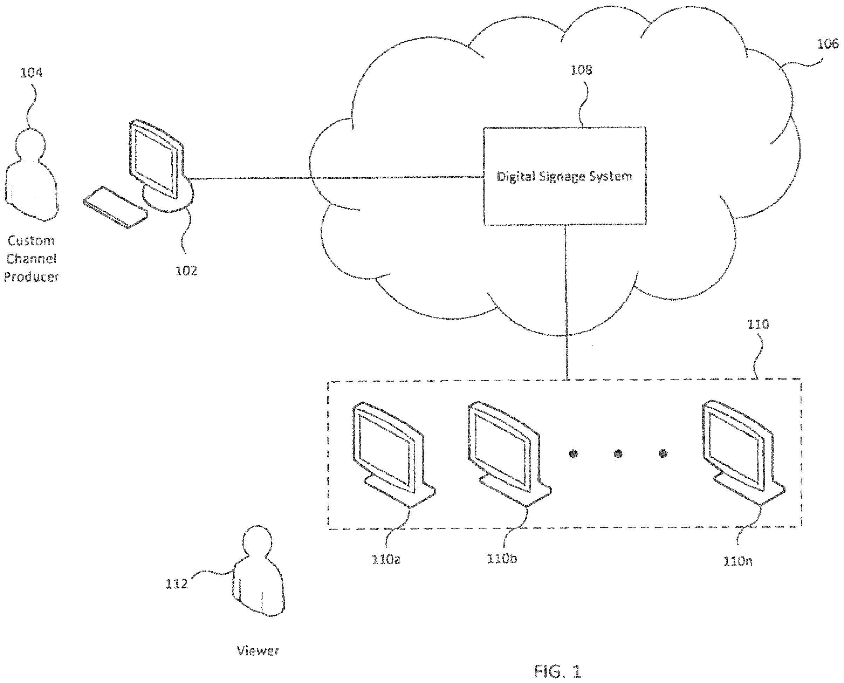

Figure 1 illustrates a digital signage system 108 implemented on network devices in a network 106.

Connected to the network 106 is a terminal 102 associated with a custom channel producer 104. The terminal 102 may be, for example a personal computer ("PC") (including, for example, Windows™, Mac OS™ and Linux™ PCs), a tablet computer, a mobile phone, a personal digital assistant ("PDA"), or other embedded device able to connect to the network 106.

The custom channel producer 104 can upload media assets (from memory on the terminal 102 or from one or more storage devices in the network 106) to storage of the assets is stored in at least one media store external to said digital signage system, each of the at least one media store storing one or more media assets deliverable to a viewing device in response to a selection by a viewer associated with at least one viewing device; receive display parameters selected by the custom channel producer; produce a custom channel comprising the selected media assets in dependence on said display parameters, and deliver said custom channel to the at least one device.

### Brief Description of the Drawings

For a better understanding of the present disclosure and to show how the same may be put into effect, reference will now be made, by way of example, to the following drawings in which:
Figure 1 illustrates a schematic view of a digital signage system;

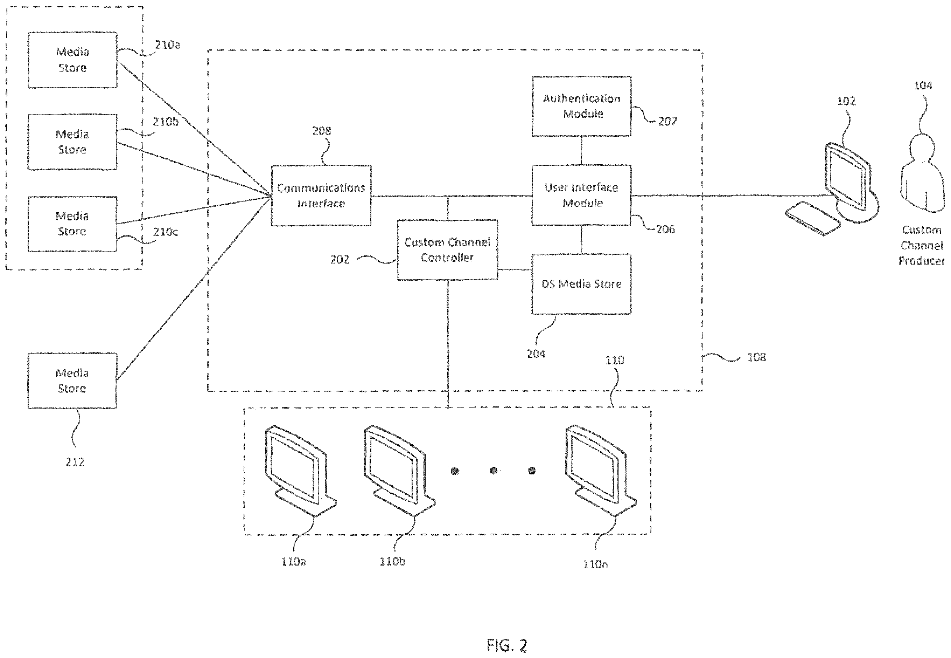

Figure 2 illustrates a schematic view of elements of the digital signage system;

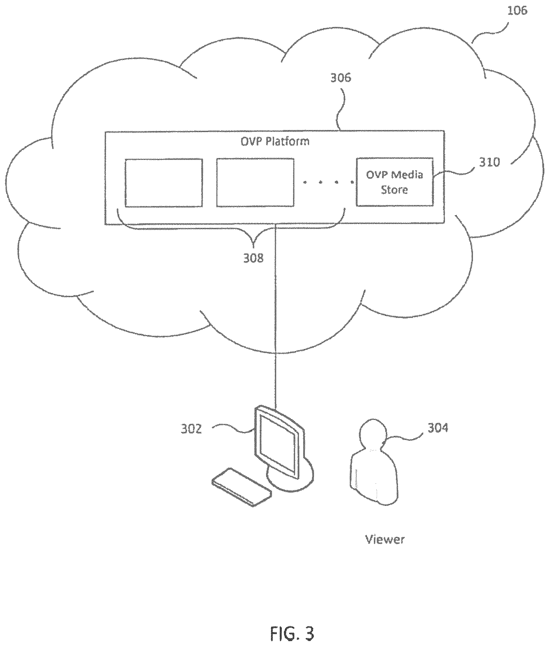

Figure 3 illustrates an online video platform;

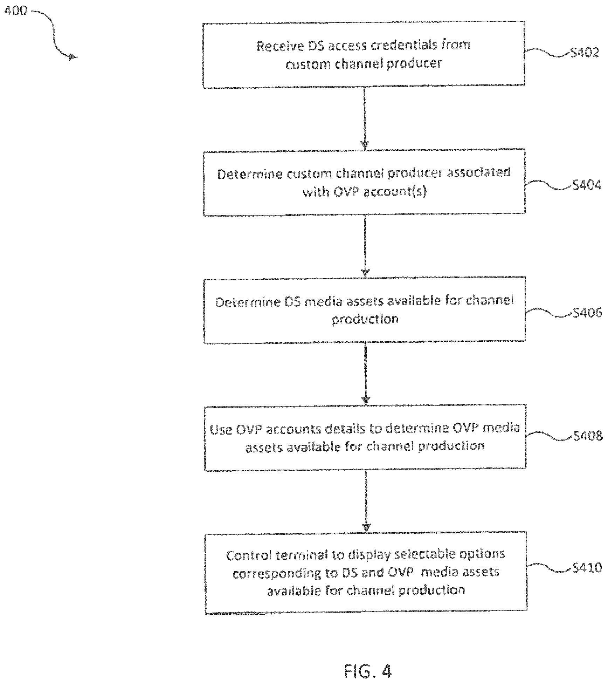

Figure 4 is a flow chart for a method to enable a custom channel producer to create a custom channel; and

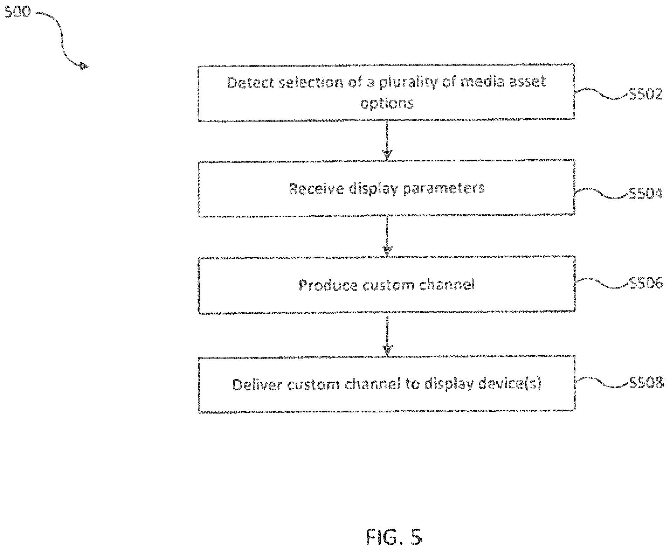

Figure 5 is a flow chart for a method of delivering a custom channel to display devices.

### Detailed Description

Figure 1 illustrates a digital signage system 108 implemented on network devices in a network 106.

Connected to the network 106 is a terminal 102 associated with a custom channel producer 104. The terminal 102 may be, for example a personal computer ("PC") (including, for example, Windows™, Mac OS™ and Linux™ PCs), a tablet computer, a mobile phone, a personal digital assistant ("PDA"), or other embedded device able to connect to the network 106.

The custom channel producer 104 can upload media assets (from memory on the terminal 102 or from one or more storage devices in the network 106) to storage of the digital signage system 108 for use in the creation of a custom channel for delivery to one or more display device 110. Media assets may comprise videos, static images or a combination thereof; audio information may also accompany displayable information. Reference to a "custom channel" is used herein to refer to a plurality of media assets that have been stitched together in dependence on display parameters selected by the custom channel producer 104.

The network 106 may be any suitable network which has the ability to provide a communication channel between the terminal 102 and the digital signage system 108, and has the ability to deliver a custom channel from the digital signage system 108 to the one or more display device 110. For example, the network 106 may be a packet-based network such as the Internet, an Intranet or a High data rate mobile network, such as a 3^{rd} generation ("3G") mobile network, or a combination of one or more of these network types

A display device of the one or more display device 110 may be any device able to receive and display media assets. For example, a display device may be a display panel, television, tablet computer etc. comprising a display e.g. an LCD display, a PDP display, an LED display, an OLED display etc. It will be appreciated that other display technologies are well known to persons skilled in the art and the selection of display technologies referred to herein are merely examples.

The display device(s) 110 may be positioned in an outdoor space for example alongside a highway or in a park; or in an indoor space for example in an airport, supermarket, shopping mall, office building etc. As shown in Figure 1, a viewer 112 may view the content of the custom channel that is delivered to the display device(s) 110. The viewer 112 has no control on what content is displayed on the display device(s) 110, as described above, the content which is displayed on the display device(s) 110 is controlled by the custom channel producer 104.

Reference is now made to Figure 2 to describe the digital signage system 108 in more detail.
The digital signage system 108 comprises a custom channel controller 202. The custom channel controller 202 is configured to produce the custom channel referred to above and deliver the custom channel over the network 106 to the display device(s) 110. The functionality of the custom channel controller 202 may be implemented in code (software) arranged for execution on one or more processing units of one or more network entities (e.g. servers) in the network 106.

The custom channel controller 202 is coupled to a digital signage media store 204 which is arranged to store digital signage media assets. The digital signage media store 204 may receive digital signage media assets that have been uploaded from memory on the terminal 102 associated with the custom channel producer 104 or transferred from one or more storage devices in the network 106. The digital signage media assets stored in the digital signage media store 204 may be associated with metadata (for example title, duration, category, keywords, author, size, description, date of creation etc.).

The digital signage media store 204 may be implemented on one or more network entities (e.g. storage server(s) or database(s)) in the network 106.

The custom channel producer 104 registers with the provider of the digital signage system 108, as part of this registration process the custom channel producer 104 sets up a digital signage account with access credentials that uniquely identifies the custom channel producer 104 to the provider of the digital signage system 108 amongst other registered custom channel producers. The access credentials may comprise for example an email address, username, password or any combination thereof. Following registration, the custom channel producer 104 can access the digital signage system 108 using his access credentials. For example, the custom channel producer 104 may enter his access credentials (log-in information) into a web browser on the terminal 102 to access the digital signage system 108.

A user interface module 206 of the digital signage system 108 is configured to receive the access credentials over the network 106 from the terminal 102. The user interface module 206 is coupled to an authentication module 207 which is configured to store account information in order to verify (or not) users of the digital signage system 108. The user interface module 206 is configured to query the authentication module 207 using the access credentials entered by the custom channel producer 104.

Once the access credentials of the custom channel producer 104 have been verified by the authentication module 207, the user interface module 206 is configured to provide the custom channel producer 104 access to the digital signage system 108.

The user interface module 206 is coupled to the digital signage media store 204. Once the access credentials of the custom channel producer 104 have been verified by the authentication module 207, the user interface module 206 is configured to transmit data to the terminal 102 to control the display of the terminal 102 to display selectable media asset options in a user interface which may be selected by the custom channel producer 104 when configuring the custom channel. A selectable media asset option may be displayed together with metadata associated with the media asset corresponding to the selectable media asset option.

In response to the custom channel producer 104 selecting a plurality of media asset options, the terminal 102 associated with the custom channel producer 104 transmits data over the network 106 to the user interface module 206 indicating the plurality of media asset options selected by the custom channel producer 104. In response to receiving this data from the terminal 102, the user interface module 206 is configured to detect selection of a plurality of media assets based on detecting selection of the media asset options corresponding to the media assets. The user interface module 206 is coupled to the custom channel controller 202 and is further configured to supply an indication of the selected media assets to the custom channel controller 202.

Using the user interface displayed on the terminal 102 associated with the custom channel producer 104, the custom channel producer 104 can configure a custom channel to be delivered on the display device(s) 110 by selecting display parameters. For example, the custom channel producer 104 can specify an order (i.e. sequence) in which the selected plurality of media assets are to be displayed in the custom channel. The custom channel producer 104 may also specify the duration for which one or more of the plurality of media assets should be displayed. Rather than specifying an order in which the selected plurality of media assets are to be displayed in the custom channel, the custom channel producer 104 may merely select the display frequency (how often a media asset is displayed in a predetermined period of time) of one or more of the selected plurality of media assets. These configurable options are transmitted from the terminal 102 to the user interface module 206 as display parameters. The user interface module 206 is configured to supply the received display parameters to the custom channel controller 202.

The functionality of the user interface module 206 may be implemented in code (software) arranged for execution on one or more processing units of one or more network entities (e.g. servers) in the network 106.

A communications interface 208 is coupled to the user interface module 206. The communications interface 208 acts as a gateway through which media assets (additional to the digital signage assets stored in the digital signage media store 204) may be pulled and used in a custom channel.

The communications interface 208 is connectable to media stores external to the digital signage system 108 which are components of OVP platforms provided by providers other than the provider of the digital signage system 108. These media stores are shown in Figure 2 as media stores 210a, 210b and 210c. Whilst Figure 2 shows three media stores 210 which are components of separate OVP platforms provided by providers other than the provider of the digital signage system 108, this is merely an example and the communications interface 208 may be connectable to any number of media stores which are components of OVP platforms provided by providers other than the provider of the digital signage system 108.

The communications interface 208 is also connectable to a media store 212 external to the digital signage system 108 which is a component of an OVP platform provided by the same provider of the digital signage system 108.

The functionality of the communications interface 208 may be implemented in code (software) arranged for execution on one or more processing units of one or more network entities (e.g. servers) in the network 106. For example the communications interface 208 may comprise application programming interfaces (APIs), wherein each API is used to communicate with a respective OVP platform.

Figure 3 illustrates an online video platform 306 implemented on network devices in the network 106.

In addition to having registered a digital signage account with the provider of the digital signage system 108, the custom channel producer 104 may also register with a provider of the online video platform 306.

As part of this registration process the custom channel producer 104 sets up an OVP account with access credentials that uniquely identifies the custom channel producer 104 to the provider of the OVP platform 306 amongst other registered users of the OVP platform 306. The access credentials may comprise for example an email address, username, password or any combination thereof. Following registration, the custom channel producer 104 can access the OVP platform 306 using his OVP account access credentials. For example, the custom channel producer 104 may enter his access credentials (log-in information) into a web browser on the terminal 102 to access the OVP platform 306.

As a registered user of the OVP platform 306, the custom channel producer 104 can upload media assets (from memory on the terminal 102 or from one or more storage devices in the network 106) to an OVP media store 310 of the OVP platform 306. The OVP media assets stored in the OVP media store 310 may be associated with metadata (for example title, duration, category, keywords, author, size, description, date of creation etc.). The OVP media store 310 may be implemented on one or more network entities (e.g. storage server(s) or database(s)) in the network 106.

In the scenario where the provider of the OVP platform 306 is different to the provider of the digital signage system 108, the OVP media store 310 corresponds to one of the media stores 210a-c. In the scenario where the provider of the OVP platform 306 is the same as the provider of the digital signage system 108, the OVP media store 310 corresponds to the media store 212.

The OVP platform 306 enables the custom channel producer 104 as a registered user of the OVP platform 306 to distribute media assets for example on their own website, video-sharing sites such as YouTube, partner websites and on social media websites. That is, the media assets in the OVP media store 310 are arranged to be delivered by the OVP platform 306 to a viewing device 302 associated with a viewer 304 in response to being selected to be viewed by the viewer 304 (for example the viewer 304 selecting to play the media asset using a player embedded in a website). This is in contrast to the viewer 112 of the digital signage display device(s) 110 who has no control on what content is displayed on the display device(s) 110. The viewing device 302 may be, for example a personal computer ("PC") (including, for example, Windows™, Mac OS™ and Linux™ PCs), a tablet computer, a mobile phone, a personal digital assistant ("PDA"), or other embedded device able to connect to the network 106. Whilst only one viewing device 302 is shown connected to the OVP platform 306 for simplicity, it will be appreciated that OVP assets hosted by the OVP platform 306 can be delivered to multiple different viewing devices.

In addition to the media store 310, the OVP platform comprises a plurality of other functional components represented by reference numeral 308. These other functional components may comprise for example an encoding module, transcoding module, content management module, analytics module etc. These other functional components are well known to persons skilled in the art and are therefore not described in detail herein.

Using the user interface provided by the user interface module 206 of the digital signage system 108, the custom channel producer 104 can associate (i.e. link) his digital signage account with his OVP account access credentials used to access the OVP platform 306. The authentication module 207 is configured to store OVP account access credentials that are associated with a digital signage account.

A flow chart 400 of a method implemented by the digital signage system 108 to enable the custom channel producer 104 to create a custom channel from other sources of media assets other than the digital signage media store 204 will now be described with reference to Figure 4.

At step S402, the user interface module 206 receives over the network 106 digital signage access credentials from the terminal 102 which have been provided by the custom channel producer 104.

The user interface module 206 queries the authentication module 207 using the digital signage access credentials to verify the custom channel producer 104 as a user of the digital signage system 108, and due to the custom channel producer 104 having associated his digital signage account with his OVP account access credentials used to access the OVP platform 306, the user interface module 206 determines at step S404 the OVP account access credentials of the custom channel producer 104.

At step S406, the user interface module 206 determines using the digital signage access credentials of the custom channel producer 104 what digital signage media assets (uploaded by the custom channel producer 104) are stored in the digital signage media store 204 i.e. what digital signage media assets are available for use by the custom channel producer 104 in the creation of a custom channel.

At step S408, the user interface module 206 supplies the OVP account access credentials of the custom channel producer 104 to the communications interface 208. The communications interface 208 uses the OVP account access credentials to connect to the OVP platform 306. Once connected to the OVP platform 306, the user interface module 206 determines using the OVP account access credentials of the custom channel producer 104 what OVP media assets (uploaded by the custom channel producer 104) are stored in the OVP media store 310.

At step S410, user interface module 206 transmits data to the terminal 102 associated with the custom channel producer 104 to display selectable media asset options on the terminal 102 in a user interface. The selectable media asset options correspond to the digital signage media assets stored in the digital signage media store 204 and the OVP media assets stored in the OVP media store 310.
Following the digital signage system 108 implementing the method illustrated in Figure 4, the custom channel producer 104 selects a plurality of the displayed media asset options.

A flow chart 500 of a method implemented by the digital signage system 108 to deliver a custom channel to display device(s) 110 will now be described with reference to Figure 5 in the scenario that at least of the media asset options selected by the custom channel producer 104 corresponds to an OVP media asset stored in the OVP media store 310.

Data indicating the plurality of media asset options selected by the custom channel producer 104 is transmitted over the network 106 from the terminal 102 and is received by the user interface module 206.

At step S502, using the received data indicating the plurality of media asset options selected by the custom channel producer 104, the user interface module 206 detects selection of a plurality of media assets corresponding to the selected media asset options. The user interface module 206 supplies an indication of the selected media assets to the custom channel controller 202.

At step S504, the user interface module 206 receives display parameters over the network from the terminal 102. The display parameters (selected by the custom channel producer 104) define how a custom channel should be produced by the custom channel controller 202.

At step S506, the custom channel controller 202 produces a custom channel in dependence on the received display parameters.

Step S506 comprises the custom channel controller 202 pulling media assets from their storage location at times governed by the received display parameters. For example if the plurality of selected media assets comprise a digital signage media asset stored in digital signage media store 204, the custom channel controller 202 will pull the digital signage media asset from the digital signage media store 204 at the appropriate time (dependent on the received display parameters). When the custom channel controller 202 determines, based on the received display parameters that it is time to pull an OVP media asset stored in the OVP media store 310, the custom channel controller 202 transmits a request via the communications interface 208 for the OVP media asset. In response to receiving this request the OVP platform 306 supplies the OVP media asset from the OVP media store 310 via the communications interface 208 to the custom channel controller 202.

At step S510, the custom channel controller 202 delivers the custom channel over the network 106 to the display device(s) 110.

The digital signage system 108 is able to deliver an OVP media asset pulled from the OVP media store 310 in a custom channel to the display device(s) 110 without having to store the OVP media asset in storage of the digital signage system 108. That is, the digital signage system 108 merely facilitates the delivery of the OVP asset in the custom channel to the display device(s) 110. This advantageously provides the ability for the custom channel producer 104 to search for, and produce a custom channel using content from other sources of media (other than digital signage assets stored in the digital signage media store 204) without having to transfer this other media into storage of the digital signage system 108.

The custom channel producer 104 can associate (i.e. link) his digital signage account with multiple OVP account access credentials used to access respective OVP platforms. In accordance with the embodiments described above, this enables the custom channel producer 104 to search for, and produce a custom channel using OVP media assets stored by multiple OVP platforms.

It will be appreciated that a custom channel delivered to the display device(s) 110 may comprise both media assets pulled from the digital signage media store 204 and media assets pulled from one or more OVP media store.

Whilst both digital signage media assets and OVP media assets may be displayed to the custom channel producer 104 on the terminal 102 following step S410, the plurality of selected media asset options may correspond only to OVP media assets. In this scenario, the custom channel delivered to the display device(s) 110 may comprise only OVP media assets pulled from one or more OVP media store.
The digital signage media store 204 may not store any digital signage media assets associated with the custom channel producer 104. In this scenario, only OVP media assets may be displayed to the custom channel producer 104 on the terminal 102, wherein the OVP media assets are associated with an OVP account associated with the custom channel producer's digital signage account. This may be the case if a customer of an OVP platform registers with the provider of the digital signage system 108 (and therefore becomes a registered custom channel producer of the digital signage system 108) in order to widen the audience of the OVP customer's OVP media assets.

Whilst it has been described above that in embodiments of the present disclosure an OVP asset can be pulled from the OVP media store 310 and delivered in a custom channel to the display device(s) 110 without having to store the OVP asset in storage of the digital signage system 108, the digital signage system 108 does have the ability to store the retrieved OVP media assets, for example in the digital signage media asset store 204 or other media store of the digital signage system 108. The digital signage system 108 may be configured to automatically store retrieved OVP media assets. Alternatively, the digital signage system 108 may only store retrieved OVP media assets based on this being configured by the custom channel producer 104.

The steps shown separately in Figures 4 and 5 may or may not be implemented as separate steps. Furthermore the present disclosure is not limited to the steps of Figures 4 and 5 being implemented in the order shown.

Any of the functionality described herein can be implemented using software, firmware, hardware (e.g., fixed logic circuitry), or a combination of these implementations. The terms "module", "functionality", "interface" and "component" as used herein generally represent software, firmware, hardware, or a combination thereof. In the case of a software implementation, the module, functionality, interface or component represents program code that performs specified tasks when executed on a processor (not shown in the Figures). The program code can be stored in one or more computer readable memory devices.

It will be appreciated that the above embodiments have been described only by way of example, and other variants or applications may be apparent to a person skilled in the art given the disclosure herein.

The present invention is not limited by the described examples but only by the appending claims. Any reference signs in the claims should not be construed as limiting the scope.

## Claims

1. A digital signage system (108) comprising:
a communications interface (208) connectable to at least one media store (210, 212) external to said digital signage system (108), each of the at least one media store storing one or more media assets deliverable to at least one viewing device (110);
a media store (204) for storing media assets;
a user interface module (206) configured to receive: i) access credentials for a custom channel producer to access the digital signage system, and ii) access credentials for the custom channel producer to access the at least one media store (210, 212) external to the digital signage system;
an authentication module (207) for verifying the access credentials of the custom channel producer to access the digital signage system;
wherein the user interface module (206) is further configured, responsive to said verification, to provide access for the custom channel producer to media assets in the media store of the digital signage system;
wherein the communication's interface (208) is configured to use the account access credentials for the verified custom channel producer to provide access to the at least one media store external to the digital signage system to determine what media assets are stored in the at least one media store external to the digital signage system;
further wherein the user interface module (206) is configured to: i) control a display of a terminal (102) external to said digital signage system and associated with a custom channel producer (104) to display media asset options, ii) detect selection by the custom channel producer (104) of at least one media asset based on detecting selection of displayed media asset options corresponding to the plurality of media assets, wherein at least one of the selected media assets is stored in the at least one media store (210, 212), and iii) receive display parameters selected by the custom channel producer (104);
the digital signage system further comprising:
a custom channel controller (202) coupled to the communications interface (208), the authentication module (207), and the user interface module (206), wherein the custom channel controller is configured to produce a custom channel comprising the selected media assets in dependence on said display parameters, and deliver said custom channel to the at least one viewing device.

2. The digital signage system according to claim 1, wherein the authentication module (207) additionally stores account information of registered custom channel producers, wherein the user interface module (206) is configured to control the display of the terminal (102) associated with the custom channel producer to display said media asset options, in response to verifying the custom channel producer as having an account associated with the digital signage system (108) by querying the authentication module (207) with access credentials received from the terminal associated with the custom channel producer

3. The digital signage system according to claim 1, wherein the access credentials received from the terminal (102) associated with the custom channel producer and the further access credentials comprise at least one of a username, password and email address.

4. The digital signage system according to claim 1 to 3, further comprising at least one media store storing further media assets, wherein the displayed media asset options comprise media asset options corresponding to further media assets stored in said at least one media store of the digital signage system.

5. The digital signage system according to claim 4, wherein the selected media assets comprise at least one further media asset stored in the at least one media store of the digital signage system, and the custom channel controller (202) is configured to produce a custom channel comprising the selected media assets by retrieving the at least one media asset from the at least one media store external to said digital signage system and retrieving the at least one further media asset from the at least one media store of the digital signage system, in dependence on said display parameters.

6. The digital signage system according to claim 1 to 5, wherein all of the selected media assets are stored in the at least one media store external to said digital signage system, the custom channel controller (202) is configured to produce a custom channel by retrieving the selected media assets from the at least one media store external to said digital signage system in dependence on said display parameters.

7. The digital signage system according to claim 6, wherein the custom channel controller (202) is configured to deliver said custom channel to the one or more viewing device (110), without storing the retrieved media assets in the at least one media store of the digital signage system.

8. The digital signage system according to any one of claims 5 to 7, wherein the custom channel controller (202) is configured to store media assets retrieved from the at least one media store external to said digital signage system in the at least one media store of the digital signage system.

9. The digital signage system according to any one of claims 1 to 8, wherein there is selected a plurality of media assets and the display parameters comprise an order of the selected plurality of media assets.

10. The digital signage system according to any one of claims 1 to 9, wherein the communications interface (208) comprises at least one application programming interface.

11. A digital signage system according to any one of claims 1 to 10, wherein the user interface module (206) controls the display of the terminal associated with the custom channel producer to display media asset options based on the at least one further media store external to said digital signage system.

12. A method of delivering media content from a digital signage system to one or more display device, the method comprising:
receiving access credentials for a custom channel producer to access the digital signage system;
receiving access credentials for the custom channel producer to access at least one media store external to the digital signage system;
verifying the access credentials of the custom channel producer to access the digital signage system;
providing access for the custom channel producer to media assets in a media store of the digital signage system;
use the account access credentials for the verified custom channel producer to provide access to the at least one media store external to the digital signage system to determine what media assets are stored in the at least one media store external to the digital signage system;
controlling a display of a terminal (102) associated with a custom channel producer (104) to display media asset options in dependence on the account access credentials, wherein at least one of the displayed media asset options is stored in at least one media store external to said digital signage system for which account access credentials are required;
detecting selection by the custom channel producer of at least one media asset based on detecting selection of displayed media asset options corresponding to the plurality of media assets, wherein at least one of the selected media assets is stored in at least one media store external to said digital signage system, each of the at least one media store storing one or more media assets deliverable to a viewing device in response to a selection by a viewer associated with at least one viewing device;
receiving display parameters selected by the custom channel producer;
producing a custom channel comprising the selected media assets in dependence on said display parameters, and
delivering said custom channel to the at least one viewing device (110).

13. A method according to claim 12 further comprising controlling the display of the terminal associated with the custom channel producer to display media asset options associated with at least one further media store external to said digital signage system for which account access credentials are not required.

14. A computer program product for delivering media content to one or more display device, the computer program product being embodied on a non-transient computer-readable medium and configured so as when executed on one or more processors to:
receiving access credentials for a custom channel producer to access the digital signage system;
receiving access credentials for the custom channel producer to access at least one media store external to the digital signage system;
verifying the access credentials of the custom channel producer to access the digital signage system;
providing access for the custom channel producer to media assets in a media store of the digital signage system;
use the account access credentials for the verified custom channel producer to provide access to the at least one media store external to the digital signage system to determine what media assets are stored in the at least one media store external to the digital signage system;
control a display of a terminal associated with a custom channel producer to display media asset options in dependence on the account access credentials, wherein at least one of the displayed media asset options is stored in at least one media store external to said digital signage system for which account access credentials are required;
detect selection by the custom channel producer (104) of at least one media assets based on detecting selection of displayed media asset options corresponding to the at least one media asset, wherein at least one of the selected media assets is stored in at least one media store external to said digital signage system, each of the at least one media store storing one or more media assets deliverable to a viewing device in response to a selection by a viewer associated with at least one viewing device;
receive display parameters selected by the custom channel producer;
produce a custom channel comprising the selected media assets in dependence on said display parameters, and
deliver said custom channel to the at least one device (110).

15. A computer program product according to claim 14 further comprising controlling the display of the terminal associated with the custom channel producer to display media asset options associated with at least one further media store external to said digital signage system for which account access credentials are not required.

## Patentansprüche

1. Digital-Signage-System (108), das Folgendes aufweist:
eine Kommunikationsschnittstelle (208), die mit mindestens einem Medienspeicher (210, 212) außerhalb des Digital-Signage-Systems (108) verbindbar ist, wobei jeder des mindestens einen Medienspeichers ein oder mehrere Media Assets speichert, die an mindestens eine Anzeigevorrichtung (110) geliefert werden können;
einen Medienspeicher (204) zum Speichern von Media Assets;
ein Benutzerschnittstellenmodul (206), ausgebildet zum Empfangen von: i) Zugangsdaten für einen Custom-Channel-Produzenten zum Zugreifen auf das Digital-Signage-System, und ii) Zugangsdaten für den Custom-Channel-Produzenten zum Zugreifen auf mindestens einen Medienspeicher (210, 212) außerhalb des Digital-Signage-Systems;
ein Authentifizierungsmodul (207) zum Überprüfen der Zugangsdaten des Custom-Channel-Produzenten zum Zugreifen auf das Digital-Signage-System;
wobei das Benutzerschnittstellenmodul (206) darüber hinaus ausgebildet ist, als Reaktion auf diese Überprüfung einen Zugang für den Custom-Channel-Produzenten zu Media Assets in dem Medienspeicher des Digital-Signage-Systems bereitzustellen;
wobei die Kommunikationsschnittstelle (208) ausgebildet ist zum Verwenden der Kontozugangsdaten für den überprüften Custom-Channel-Produzenten, um einen Zugang zu dem mindestens einen Medienspeicher außerhalb des Digital-Signage-Systems bereitzustellen, um zu bestimmen, welche Media Assets in dem mindestens einen Medienspeicher außerhalb des Digital-Signage-Systems gespeichert werden;
wobei darüber hinaus das Benutzerschnittstellenmodul (206) ausgebildet ist zum: i) Steuern einer Anzeige eines Endgeräts (102) außerhalb des Digital-Signage-Systems, das einem Custom-Channel-Produzenten (104) zugeordnet ist, zum Anzeigen von Media-Asset-Optionen, ii) Erkennen der Auswahl von mindestens einem Media Asset durch den Custom-Channel-Produzenten (104) basierend auf dem Erkennen der Auswahl von angezeigten Media-Asset-Optionen, die der Vielzahl von Media Assets entsprechen, wobei mindestens eines der ausgewählten Media Assets in dem mindestens einen Medienspeicher (210, 212) gespeichert ist, und iii) Empfangen von Anzeigeparametern, die von dem Custom-Channel-Produzenten (104) ausgewählt wurden;
wobei das Digital-Signage-System darüber hinaus Folgendes aufweist:
ein Custom-Channel-Steuerungsgerät (202), das mit der Kommunikationsschnittstelle (208), dem Authentifizierungsmodul (207) und dem Benutzerschnittstellenmodul (206) gekoppelt ist, wobei das Custom-Channel-Steuerungsgerät ausgebildet ist zum Produzieren eines Custom Channel, der die ausgewählten Media Assets enthält, in Abhängigkeit von den Anzeigeparametern und zum Liefern des Custom Channel an die mindestens eine Anzeigevorrichtung.

2. Digital-Signage-System nach Anspruch 1, wobei das Authentifizierungsmodul (207) zusätzlich Kontoinformationen des registrierten Custom-Channel-Produzenten speichert, wobei das Benutzerschnittstellenmodul (206) ausgebildet ist zum Steuern der Anzeige des dem Custom-Channel-Produzenten zugeordneten Endgeräts (102), um die Media-Asset-Optionen anzuzeigen als Reaktion auf das Überprüfen, ob der Custom-Channel-Produzent ein dem Digital-Signage-System (108) zugeordnetes Konto besitzt, indem das Authentifizierungsmodul (207) mit Zugangsdaten abgefragt wird, die von dem Endgerät empfangen wurden, das dem Custom-Channel-Produzenten zugeordnet ist.

3. Digital-Signage-System nach Anspruch 1, wobei die von dem Endgerät (102), das dem Custom-Channel-Produzenten zugeordnet ist, empfangenen Zugangsdaten und die weiteren Zugangsdaten einen Benutzernamen und/oder ein Passwort und/oder eine E-Mail-Adresse aufweisen.

4. Digital-Signage-System nach Anspruch 1 bis 3, das darüber hinaus mindestens einen Medienspeicher aufweist, der weitere Media Assets speichert, wobei die angezeigten Media-Asset-Optionen Media-Asset-Optionen aufweisen, die weiteren Media Assets entsprechen, die in dem mindestens einen Medienspeicher des Digital-Signage-Systems gespeichert sind.

5. Digital-Signage-System nach Anspruch 4, wobei die ausgewählten Media Assets mindestens ein weiteres Media Asset aufweisen, das in dem mindestens einen Medienspeicher des Digital-Signage-Systems gespeichert ist, und das Custom-Channel-Steuerungsgerät (202) ausgebildet ist zum Produzieren eines Custom Channel, der die ausgewählten Media Assets enthält, durch Abrufen des mindestens einen Media Assets von dem mindestens einen Medienspeicher außerhalb des Digital-Signage-Systems und Abrufen des mindestens einen weiteren Media Assets von dem mindestens einen Medienspeicher des Digital-Signage-Systems in Abhängigkeit von den Anzeigeparametern.

6. Digital-Signage-System nach Anspruch 1 bis 5, wobei alle ausgewählten Media Assets in dem mindestens einen Medienspeicher außerhalb des Digital-Signage-Systems gespeichert sind und das Custom-Channel-Steuerungsgerät (202) ausgebildet ist zum Produzieren eines Custom Channel durch Abrufen der ausgewählten Media Assets von dem mindestens einen Medienspeicher außerhalb des Digital-Signage-Systems in Abhängigkeit von den Anzeigeparametern.

7. Digital-Signage-System nach Anspruch 6, wobei das Custom-Channel-Steuerungsgerät (202) ausgebildet ist zum Liefern des Custom Channel an das eine oder die mehreren Anzeigegeräte (110), ohne die abgerufenen Media Assets in dem mindestens einen Medienspeicher des Digital-Signage-Systems zu speichern.

8. Digital-Signage-System nach einem der Ansprüche 5 bis 7, wobei das Custom-Channel-Steuerungsgerät (202) ausgebildet ist zum Speichern von Media Assets, die von dem mindestens einen Medienspeicher außerhalb des Digital-Signage-Systems in den mindestens einen Medienspeicher des Digital-Signage-Systems abgerufen wurden.

9. Digital-Signage-System nach einem der Ansprüche 1 bis 8, wobei eine Vielzahl von Media Assets ausgewählt wird und die Anzeigeparameter eine Reihenfolge der Vielzahl von Media Assets aufweisen.

10. Digital-Signage-System nach einem der Ansprüche 1 bis 9, wobei die Kommunikationsschnittstelle (208) mindestens eine Anwendungsprogrammierschnittstelle aufweist.

11. Digital-Signage-System nach einem der Ansprüche 1 bis 10, wobei das Benutzerschnittstellenmodul (206) die Anzeige des dem Custom-Channel-Produzenten zugeordneten Endgeräts steuert, um basierend auf dem mindestens einen weiteren Medienspeicher außerhalb des Digital-Signage-Systems die Media-Asset-Optionen anzuzeigen.

12. Verfahren zum Liefern von Medieninhalten von einem Digital-Signage-System an ein oder mehrere Anzeigevorrichtungen, wobei das Verfahren Folgendes aufweist:
Empfangen von Zugangsdaten für einen Custom-Channel-Produzenten zum Zugreifen auf das Digital-Signage-System;
Empfangen von Zugangsdaten für einen Custom-Channel-Produzenten zum Zugreifen auf mindestens einen Medienspeicher außerhalb des Digital-Signage-Systems;
Überprüfen der Zugangsdaten des Custom-Channel-Produzenten zum Zugreifen auf das Digital-Signage-System;
Bereitstellen eines Zugangs für den Custom-Channel-Produzenten zu Media Assets in einem Medienspeicher des Digital-Signage-Systems;
Verwenden der Kontozugangsdaten für den überprüften Custom-Channel-Produzenten, um einen Zugang zu dem mindestens einen Medienspeicher außerhalb des Digital-Signage-Systems bereitzustellen, um zu bestimmen, welche Media Assets in dem mindestens einen Medienspeicher außerhalb des Digital-Signage-Systems gespeichert werden;
Steuern einer Anzeige eines Endgeräts (102), das einem Custom-Channel-Produzenten (104) zugeordnet ist, zum Anzeigen von Media-Asset-Optionen in Abhängigkeit von den Kontozugangsdaten, wobei mindestens eine der angezeigten Media-Asset-Optionen in dem mindestens einen Medienspeicher außerhalb des Digital-Signage-Systems gespeichert ist, für den Kontozugangsdaten benötigt werden;
Erkennen der Auswahl von mindestens einem Media Asset durch den Custom-Channel-Produzenten basierend auf dem Erkennen der Auswahl von angezeigten Media-Asset-Optionen, die der Vielzahl von Media Assets entsprechen, wobei mindestens eines der ausgewählten Media Assets in mindestens einem Medienspeicher außerhalb des Digital-Signage-Systems gespeichert ist und jeder des mindestens einen Medienspeichers ein oder mehrere Media Assets speichert, die als Reaktion auf eine Auswahl durch einen Betrachter geliefert werden können, der mindestens einer Anzeigevorrichtung zugeordnet ist;
Empfangen von Anzeigeparametern, die von dem Custom-Channel-Produzenten ausgewählt wurden;
Produzieren eines Custom Channel, der die ausgewählten Media Assets enthält, in Abhängigkeit von den Anzeigeparametern und
Liefern des Custom Channel an die mindestens eine Anzeigevorrichtung (110).

13. Verfahren nach Anspruch 12, das darüber hinaus das Steuern der Anzeige des dem Custom-Channel-Produzenten zugeordneten Endgeräts aufweist, um Media-Asset-Optionen anzuzeigen, die mindestens einem weiteren Medienspeicher außerhalb des Digital-Signage-Systems zugeordnet sind, für den keine Kontozugangsdaten benötigt werden.

14. Computerprogrammprodukt zum Liefern von Medieninhalten an eine oder mehrere Anzeigevorrichtungen, wobei das Computerprogrammprodukt als nicht flüchtiges, computerlesbares Medium ausgeführt ist und so ausgebildet ist, dass es beim Ausführen auf einem oder mehreren Prozessoren Folgendes ausführt:
Empfangen von Zugangsdaten für einen Custom-Channel-Produzenten zum Zugreifen auf das Digital-Signage-System;
Empfangen von Zugangsdaten für einen Custom-Channel-Produzenten zum Zugreifen auf mindestens einen Medienspeicher außerhalb des Digital-Signage-Systems;
Überprüfen der Zugangsdaten des Custom-Channel-Produzenten zum Zugreifen auf das Digital-Signage-System;
Bereitstellen eines Zugangs für den Custom-Channel-Produzenten zu Media Assets in einem Medienspeicher des Digital-Signage-Systems;
Verwenden der Kontozugangsdaten für den überprüften Custom-Channel-Produzenten, um einen Zugang zu dem mindestens einen Medienspeicher außerhalb des Digital-Signage-Systems bereitzustellen, um zu bestimmen, welche Media Assets in dem mindestens einen Medienspeicher außerhalb des Digital-Signage-Systems gespeichert werden;
Steuern einer Anzeige eines Endgeräts, das einem Custom-Channel-Produzenten zugeordnet ist, zum Anzeigen von Media-Asset-Optionen in Abhängigkeit von den Kontozugangsdaten, wobei mindestens eine der angezeigten Media-Asset-Optionen in dem mindestens einen Medienspeicher außerhalb des Digital-Signage-Systems gespeichert ist, für den Kontozugangsdaten benötigt werden;
Erkennen der Auswahl von mindestens einem Media Asset durch den Custom-Channel-Produzenten (104) basierend auf dem Erkennen der Auswahl von angezeigten Media-Asset-Optionen, die dem mindestens einen Media Asset entsprechen, wobei mindestens eines der ausgewählten Media Assets in mindestens einem Medienspeicher außerhalb des Digital-Signage-Systems gespeichert ist und jeder des mindestens einen Medienspeichers ein oder mehrere Media Assets speichert, die als Reaktion auf eine Auswahl durch einen Betrachter geliefert werden können, der mindestens einer Anzeigevorrichtung zugeordnet ist;
Empfangen von Anzeigeparametern, die von dem Custom-Channel-Produzenten ausgewählt wurden;
Produzieren eines Custom Channel, der die ausgewählten Media Assets enthält, in Abhängigkeit von den Anzeigeparametern und
Liefern des Custom Channel an die mindestens eine Anzeigevorrichtung (110).

15. Computerprogrammprodukt nach Anspruch 14, das darüber hinaus das Steuern der Anzeige des dem Custom-Channel-Produzenten zugeordneten Endgeräts aufweist, um Media-Asset-Optionen anzuzeigen, die mindestens einem weiteren Medienspeicher außerhalb des Digital-Signage-Systems zugeordnet sind, für den keine Kontozugangsdaten benötigt werden.

## Revendications

1. Système de signalisation numérique (108) comprenant :
une interface de communication (208) connectable à au moins un magasin multimédia (210, 212) extérieur au dit système de signalisation numérique (108), chacun du ou des magasins multimédias stockant un ou plusieurs contenus multimédias livrables à au moins un dispositif de visualisation (110),
un magasin multimédia (204) destiné à stocker des contenus multimédias,
un module interface utilisateur (206) configuré pour recevoir : i) des justificatifs d'accès pour qu'un producteur de canaux personnalisés accède au système de signalisation numérique, et ii) des justificatifs d'accès pour que le producteur de canaux personnalisés accède à ce ou à ces magasins multimédias (210, 212) extérieurs au système de signalisation numérique,
un module d'authentification (207) permettant de vérifier les justificatifs d'accès du producteur de canaux personnalisés pour qu'il accède au système de signalisation numérique,
dans lequel le module interface utilisateur (206) est en outre configuré, en réponse à ladite vérification, pour fournir un accès au producteur de canaux personnalisés vers ces contenus multimédias dans le magasin multimédia du système de signalisation numérique,
dans lequel l'interface de communication (208) est configurée pour utiliser les justificatifs d'accès aux comptes pour que le producteur de canaux personnalisés procure un accès à ce ou à ces magasins multimédias extérieurs au système de signalisation numérique afin de déterminer quels sont les contenus multimédias stockés dans le ou les magasins multimédias extérieurs au système de signalisation numérique,
dans lequel le module interface utilisateur (206) est en outre configuré pour : i) piloter un afficheur de terminal (102) extérieur au dit système de signalisation numérique et associé à un producteur de canaux personnalisés (104) afin d'afficher des options de contenus multimédias, ii) détecter une sélection opérée par le producteur de canaux personnalisés (104) concernant au moins un contenu multimédia sur la base de la détection d'options affichées de contenus multimédias correspondant à la pluralité de contenus multimédias, au moins l'un des contenus multimédias sélectionnés étant stocké dans le ou les magasins multimédias (210, 212), et iii) recevoir des paramètres d'affichage sélectionnés par le producteur de canaux personnalisés (104),
le système de signalisation numérique comprenant en outre :
un contrôleur de canaux personnalisés (202) couplé à l'interface de communication (208), au module d'authentification (207) et au module interface utilisateur (206), le contrôleur de canaux personnalisés étant configuré pour générer un canal personnalisé comprenant les contenus multimédias sélectionnés en fonction desdits paramètres d'affichage, et pour délivrer ledit canal personnalisé à ce ou à ces dispositifs de visualisation.

2. Système de signalisation numérique selon la revendication 1, dans lequel le module d'authentification (207) stocke en outre des informations sur les comptes des producteurs de canaux personnalisés inscrits, le module interface utilisateur (206) étant configuré pour piloter l'afficheur du terminal (102) associé au producteur de canaux personnalisés afin d'afficher lesdites options des contenus multimédias, en réponse à la vérification de ce que le producteur de canaux personnalisés possède un compte associé au système de signalisation numérique (108) en interrogeant le module d'authentification (207) quant aux justificatifs d'accès reçus du terminal associé au producteur de canaux personnalisés.

3. Système de signalisation numérique selon la revendication 1, dans lequel les justificatifs d'accès reçus en provenance du terminal (102) associé au producteur de canaux personnalisés, ainsi que les autres justificatifs d'accès comprennent au moins un paramètre parmi un utilisateur, un mot de passe et une adresse de messagerie électronique.

4. Système de signalisation numérique selon les revendications 1 à 3, comprenant en outre au moins un magasin multimédia stockant d'autres contenus multimédias, les options affichées des contenus multimédias comprenant des options de contenus multimédias correspondant à d'autres contenus multimédias stockés dans ledit ou lesdits magasins multimédias du système de signalisation numérique.

5. Système de signalisation numérique selon la revendication 4, dans lequel les contenus multimédias sélectionnés comprennent au moins un autre contenu multimédia stocké dans le ou les magasins multimédias du système de signalisation numérique, et le contrôleur de canaux personnalisés (202) est configuré pour générer un canal personnalisé comprenant les contenus multimédias sélectionnés en récupérant le ou les contenus multimédias auprès du ou des magasins multimédias extérieurs au dit système de signalisation numérique, et en récupérant le ou les autres contenus multimédias auprès ou des magasins multimédias du système de signalisation numérique en fonction desdits paramètres d'affichage.

6. Système de signalisation numérique selon les revendications 1 à 5, dans lequel la totalité des contenus multimédias sélectionnés est stockée dans le ou les magasins multimédias extérieurs au dit système de signalisation numérique, le contrôleur de canaux personnalisés (202) étant configuré pour générer un canal personnalisé en récupérant les contenus multimédias sélectionnés auprès du ou des magasins multimédias extérieurs au dit système de signalisation numérique en fonction desdits paramètres d'affichage.

7. Système de signalisation numérique selon la revendication 6, dans lequel le contrôleur de canaux personnalisés (202) est configuré pour délivrer ledit canal personnalisé à ce ou à ces dispositifs de visualisation (110) sans stocker les contenus multimédias récupérés dans le ou les magasins multimédias du système de signalisation numérique.

8. Système de signalisation numérique selon l'une quelconque des revendications 5 à 7, dans lequel le contrôleur de canaux personnalisés (202) est configuré pour stocker dans le ou les magasins multimédias du système de signalisation numérique des contenus multimédias récupérés auprès du ou des magasins multimédias extérieurs au dit système de signalisation numérique.

9. Système de signalisation numérique selon l'une quelconque des revendications 1 à 8, dans lequel est sélectionnée une pluralité de contenus multimédias, et où les paramètres d'affichage comprennent l'ordre de la pluralité sélectionnée de contenus multimédias.

10. Système de signalisation numérique selon l'une quelconque des revendications 1 à 9, dans lequel l'interface de communication (208) comprend au moins une interface de programmation d'application.

11. Système de signalisation numérique selon l'une quelconque des revendications 1 à 10, dans lequel le module interface utilisateur (206) pilote l'afficheur du terminal associé au producteur de canaux personnalisés afin d'afficher des options de contenus multimédias sur la base du ou des autres magasins multimédias extérieurs au dit système de signalisation numérique.

12. Procédé de délivrance d'un contenu multimédia depuis un système de signalisation numérique à un ou plusieurs dispositifs d'affichage, le procédé comprenant :
la réception de justificatifs d'accès pour qu'un producteur de canaux personnalisés accède au système de signalisation numérique,
la réception de justificatifs d'accès pour que le producteur de canaux personnalisés accède à au moins un magasin multimédia extérieur au système de signalisation numérique,
la vérification des justificatifs d'accès du producteur de canaux personnalisés pour accéder au système de signalisation numérique,
la délivrance d'un accès au producteur de canaux personnalisés vers des contenus multimédias dans un magasin multimédia du système de signalisation numérique,
l'utilisation des justificatifs d'accès aux comptes pour le producteur vérifié de canaux personnalisés pour fournir un accès à ce ou à ces magasins multimédias extérieurs au système de signalisation numérique afin de déterminer les contenus multimédias qui sont stockés dans le ou les magasins multimédias extérieurs au système de signalisation numérique,
le pilotage d'un afficheur de terminal (102) associé à un producteur de canaux personnalisés (104) pour afficher des options de canaux multimédias en fonction des justificatifs d'accès aux comptes, au moins l'une des options affichée des contenus multimédias étant stockée dans au moins un magasin multimédia extérieur au dit système de signalisation numérique pour lequel sont requis des justificatifs d'accès aux comptes,
la détection d'une sélection opérée par le producteur de canaux personnalisés concernant au moins un contenu multimédia sur la base de la détection d'une sélection d'options affichées de contenus multimédias correspondant à la pluralité de contenus multimédias, au moins l'un des contenus multimédias sélectionnés étant stocké dans au moins un magasin multimédia extérieur au dit système de signalisation numérique, chacun du ou des magasins multimédias stockant un ou plusieurs contenus multimédias livrables à un dispositif de visualisation en réponse à une sélection opérée par un observateur associé à au moins un dispositif de visualisation,
la réception de paramètres d'affichage sélectionnés par le producteur de canaux personnalisés,
la génération d'un canal personnalisé comprenant les contenus multimédias sélectionnés en fonctions desdits paramètres d'affichage, et
la délivrance dudit canal personnalisé à ce ou à ces dispositifs de visualisation (110).

13. Procédé selon la revendication 12, comprenant en outre le pilotage de l'afficheur du terminal associé au producteur de canaux personnalisés pour afficher des options de contenus multimédias associées à au moins un autre magasin multimédia extérieur au dit système de signalisation numérique pour lequel des justificatifs d'accès aux comptes ne sont pas requis.

14. Produit de programme informatique permettant de délivrer un contenu multimédia à un ou plusieurs dispositifs d'affichage, produit de programme informatique étend intégrer sur un support non transitoire pouvant être lu par ordinateur et configuré de sorte, lorsqu'il est exécuté sur un ou plusieurs processeurs, à :
recevoir des justificatifs d'accès pour qu'un producteur de canaux personnalisés accède au système de signalisation numérique,
recevoir des justificatifs d'accès pour que le producteur de canaux personnalisés accède à au moins un magasin multimédia extérieur au système de signalisation numérique,
vérifier les justificatifs d'accès du producteur de canaux personnalisés pour accéder au système de signalisation numérique,
fournir un accès au producteur de canaux personnalisés vers des contenus multimédias dans un magasin multimédia du système de signalisation numérique,
utiliser les justificatifs d'accès aux comptes pour le producteur vérifié de canaux personnalisés pour fournir un accès à ce ou à ces magasins multimédias extérieurs au système de signalisation numérique afin de déterminer les contenus multimédias qui sont stockés dans le ou les magasins multimédias extérieurs au système de signalisation numérique,
piloter un afficheur de terminal associé à un producteur de canaux personnalisés pour afficher des options de canaux multimédias en fonction des justificatifs d'accès aux comptes, au moins l'une des options affichée des contenus multimédias étant stockée dans au moins un magasin multimédia extérieur au dit système de signalisation numérique pour lequel sont requis des justificatifs d'accès aux comptes,
détecter une sélection opérée par le producteur de canaux personnalisés (104) concernant au moins un contenu multimédia sur la base de la détection d'une sélection d'options affichées de contenus multimédias correspondant à ce ou à ces contenus multimédias, au moins l'un des contenus multimédias sélectionnés étant stocké dans au moins un magasin multimédia extérieur au dit système de signalisation numérique, chacun du ou des magasins multimédias stockant un ou plusieurs contenus multimédias livrables à un dispositif de visualisation en réponse à une sélection opérée par un observateur associé à au moins un dispositif de visualisation,
recevoir des paramètres d'affichage sélectionnés par le producteur de canaux personnalisés,
générer un canal personnalisé comprenant les contenus multimédias sélectionnés en fonctions desdits paramètres d'affichage, et
délivrer ledit canal personnalisé à ce ou à ces dispositifs de visualisation (110).

15. Produit de programme informatique selon la revendication 14, comprenant en outre le pilotage de l'afficheur du terminal associé au producteur de canaux personnalisés pour afficher des options de contenus multimédias associées à au moins un autre magasin multimédia extérieur au dit système de signalisation numérique pour lequel des justificatifs d'accès aux comptes ne sont pas requis.
